# EUROPÄISCHE PATENTSCHRIFT

(11) **EP 0 544 175 B1**
(45) Veröffentlichungstag und Bekanntmachung des Hinweises auf die Patenterteilung: **10.01.1996**
(21) Anmeldenummer: 92119579.8
(22) Anmeldetag: 17.11.1992
(51) Int. Cl.: F16M 7/00

(54) **Maschinenfuss**
Machine base
Pied de support de machine

(30) Priorität: 27.11.1991 DE 4138961
(43) Veröffentlichungstag der Anmeldung: 02.06.1993
(73) Patentinhaber: YMOS AKTIENGESELLSCHAFT Industrieprodukte, D-63179 Obertshausen (DE)
(72) Erfinder: Winkler, Herbert, D-5620 Velbert (DE)
(74) Vertreter: Schieferdecker, Lutz, Dipl.-Ing.

(56) Entgegenhaltungen:
- DE-A- 3 306 244
- DE-B- 1 127 671
- DE-C- 3 978
- FR-A- 1 483 756
- US-A- 3 155 357
- US-A- 3 198 506
- PATENT ABSTRACTS OF JAPAN, Band 3. Nr. 112 (M-73), 18. September 1979; & JP-A-54 86 074 (MITSUBISHI DENKI) 09-07-1979

## Beschreibung

Die Erfindung betrifft einen Maschinenfuß mit Merkmalen gemäß dem Oberbegriff des Patentanspruches 1.

Ein Maschinenfuß der genannten Art ist z.B. aus der DE-B-1 127 671 bekannt. Dieser Maschinenfuß umfaßt ein maschinenseitiges Oberteil, ein bodenseitiges Unterteil und eine zwischen diesen beiden Teilen angeordnete Druckfeder. Ferner ist ein elastisch verformbarer Körper zwischen dem Oberteil und dem Unterteil angeordnet und überträgt die auftretenden Kräfte zumindest teilweise von dem Oberteil auf das Unterteil unter Umgehung der Druckfeder. Wesentlich für diesen bekannten Maschinenfuß ist, daß er mit einer veränderbaren Dämpfung ausgestattet ist. Sie ist vorgesehen, da in vielen Fällen die Unwuchten, die die Ursache für Maschinenbewegungen sind, ihrer Größe nach nicht bekannt sind und da die Unwuchten sich auch während des Betriebes ändern können. Um hieraus resultierende Schwierigkeiten zu meistern, ist die Vorspannung des elastischen Körpers einstellbar, wozu er im Inneren der Druckfeder angeordnet und durch eine Schraube zusammendrückbar ist. Der elastische Körper überträgt dabei Kräfte an einen zentrisch am Unterteil angeordneten Dorn und liegt ferner innen an der Druckfeder an.

Darüber hinaus ist aus der JP-A-5486074 entsprechend Patent Abstracts of Japan, Bd. 3 Nr. 112 (M-73), ein Dämpfungselement bekannt, das unter anderem einen äußeren, zylindrischen Körper und konzentrisch dazu eine Schraubenfeder und eine sich auf der Schraubenfeder abstützende Stange umfaßt. Ferner ist ein als Dämpfungselement dienender, im Querschnitt trapezförmiger Ring vorgesehen, der Kräfte von der Stange auf den zylindrischen Körper überträgt. Hierzu dienen darüber hinaus zwei Scheiben mit einander zugewandten, an dem Dämpfungsring anliegenden Kegelflächen und eine zwischen den beiden Scheiben angeordnete Tellerfeder. Auch hier ändert sich der Grad der Dämpfung unter Berücksichtigung der jeweiligen Belastung.

Darüber hinaus sind Maschinenfüße der eingangs genannten Art mit mehr oder weniger umfangreichen Abwandlungen in US-PS 3 155 357 und 3 198 506, der FR-A-1 483 756 bzw. der DE-C-3 978 beschrieben.

Sie werden jeweils an der Unterseite des Maschinengehäuses nahe den vier Ecken angeordnet, wobei sich Bodenunebenheiten dadurch ausgleichen lassen, daß das als Gewindebolzen ausgebildete Anschlußteil mehr oder weniger tief in ein an der Unterseite des Maschinengehäuses befindliches Gewinde eingeschraubt wird. Dies geschieht ferner von Hand, so daß es möglich ist, die Maschine durch individuelle Höheneinstellung der Maschinenfüße unabhängig von den jeweiligen Bodenverhältnissen exakt waagerecht auszurichten.

Zwar erfordert die exakte Ausrichtung der Maschine durch an den Maschinenfüßen nacheinander vorzunehmende Höhenverstellungen einiges Geschick, doch Probleme treten dann auf, wenn z.B. ein Waschautomat in Form einer Unterbau-Maschine aufgestellt werden muß und die hinteren Maschinenfüße in der Einbaustellung nicht oder nur noch mit erheblichen Schwierigkeiten zugänglich sind. Ähnliche Probleme ergeben sich bei einer Aufstellung der Maschine in einer Raumecke oder Nische, weil auch dann mindestens einer der Maschinenfüße nicht zugänglich ist.

Der Erfindung liegt daher die Aufgabe zugrunde, einen Maschinenfuß zu schaffen, der gute Dämpfungseigenschaften aufweist und der mit einfachen Mitteln innerhalb einer gewissen Höhendifferenz selbsttätig einen Höhenausgleich bewirkt und daher keine oder nur noch eine grobe Höheneinstellung von Hand erfordert, die bereits vor dem Aufstellen der Maschine vorgenommen werden kann.

Zur Lösung dieser Aufgabe sieht die Erfindung die Merkmale gemäß dem kennzeichnenden Teil des Patentanspruches 1 vor.

Gemäß der Erfindung ist der elastisch verformbare Körper ein Ringkörper und ebenfalls zwischen zwei Kegelflächen und einem zylindrischen Gehäuse angeordnet, so daß er in der Lage ist, auftretende Kräfte unmittelbar zu übertragen. Wesentlich ist dabei allerdings, daß alle auftretenden Kräfte ausschließlich durch den elastischen Körper gerichtet sind, da eine weitere, form- oder kraftschlüssige Verbindung zwischen dem Oberteil und dem Unterteil des Maschinenfußes nicht gegeben ist. Der ringförmige Körper dient daher nicht nur als Dämpfungselement wie im Falle der Vorveröffentlichungen, sondern zugleich als ausschließliches Kraftübertragungselement.

Das Federelement gleicht mit einer Grobeinstellung nicht zu erfassende Höhenunterschiede oder Bodenunebenheiten aus, da es eine stufenlose Verstellung des Oberteiles relativ zum Unterteil zuläßt. Notwendig ist lediglich die richtige Auswahl des Federelementes, bei dem es sich vorzugsweise um eine konische Schraubenfeder handelt, deren Federkonstante sich bei Verwendung an einer Maschine mit vier Füßen aufgrund des halben Maschinengewichtes und des gewünschten Federweges ergibt. Bei einer rein statischen Belastung aufgrund einer Gewichtskraft erfüllt der Maschinenfuß die an ihn gestellten Anforderungen in hervorragender Weise.

Sofern zusätzlich zu der statischen Belastung aufgrund einer Gewichtskraft noch dynamische Kräfte hinzukommen, die z.B. durch periodische oder durch aperiodische Schwingungen hervorgerufen sein können, so werden diese Kräfte möglichst weitgehend unter Umgehung des Federelementes abgestützt. Dies geschieht mit Hilfe des elastisch verformbaren Elementes, das unmittelbar sowie kraftschlüssig - bezogen auf die Wirkrichtung der Schwingungen - am Unterteil angreift.

Weitere Ausgestaltungen und zweckmäßige Weiterbildungen der Erfindung gehen aus Unteransprüchen im Zusammenhang mit der Beschreibung und der Zeichnung hervor.

Die Erfindung wird nachstehend anhand von Ausführungsbeispielen, die in der Zeichnung dargestellt sind, näher beschrieben. Dabei zeigen:
- Fig. 1:: einen Maschinenfuß zum Teil im Schnitt;
- Fig. 2:: die Einzelheit II in Fig. 1 in größerem Maßstab;
- Fig. 3:: eine Ansicht eines Waschautomaten mit vier Maschinenfüßen und
- Fig. 4:: eine Ansicht der Unterseite des Waschautomaten gemäß Fig. 3.

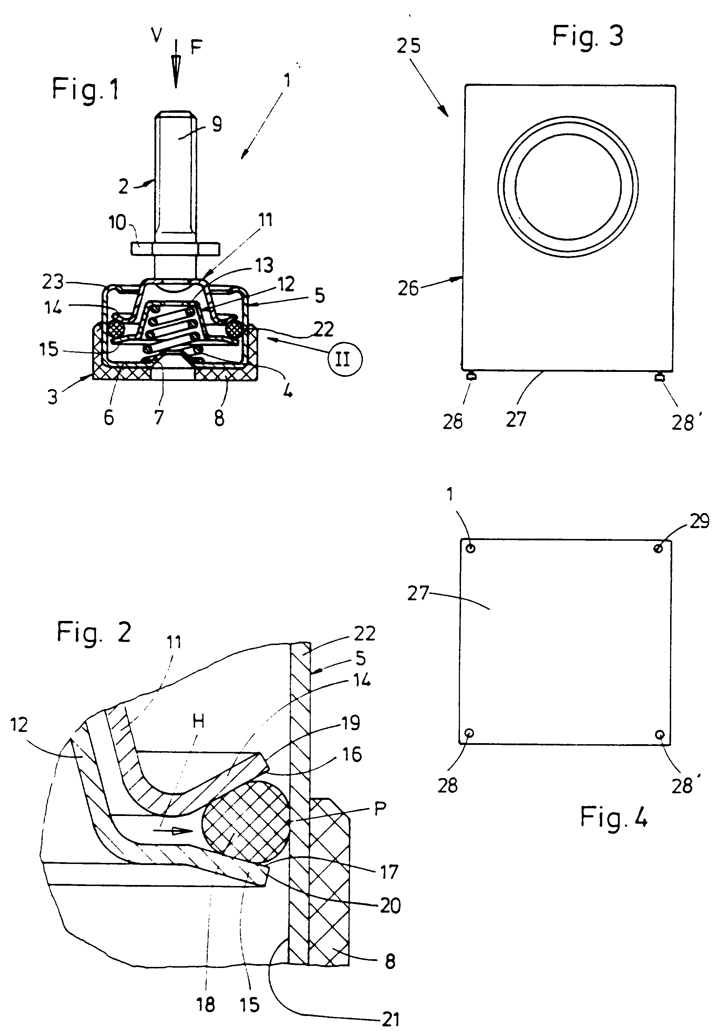

Ein Maschinenfuß 1 gemäß Fig. 1 besteht aus einem maschinenseitigen Oberteil 2 und einem bodenseitigen Unterteil 3, zwischen denen ein Federelement 4 angeordnet ist. Das Federelement 4 ist zweckmäßigerweise eine konische Schraubenfeder. Sie ist in einem Gehäuse 5 stehend angeordnet, stützt sich am Gehäuseboden 6 ab und ist dort mit Hilfe eines Vorsprunges 7 zentriert.

Das Gehäuse 5 und eine dieses bodenseitig umgreifende Rutschkappe 8 bilden das Unterteil 3 des Maschinenfußes 1.

Zum Oberteil 2 des Maschinenfußes 1 gehören ein Anschlußteil 9, das gemäß Ausührungsbeispiel ein Gewindebolzen mit Schlüsselflächen 10 ist und ein am bodenseitigen Ende des Anschlußteiles 9 angeordneter, hutförmiger Teller 11. Ein weiterer hutförmiger Teller 12 übergreift das obere, freie Ende 13 des Federelementes 4 und ist parallel sowie koaxial zum Teller 11 angeordnet. Der Teller 12 stützt sich am oberen freien Ende 13 des Federelementes 4 ab. Die Teller 12 und 13 bestehen je aus einem napfförmigen Mittelteil und weisen je ein radial auswärts gerichtetes Randelement 14 bzw. 15 auf. An den Randelementen 14 bzw. 15 befinden sich einander zugewandte, radial auswärts divergierende Kegelflächen 16, 17. Der zum Oberteil 2 gehörende Teller 11 übergreift den zum Federelement 4 gehörenden Teller 12 teilweise und stützt sich auf dem Teller 12 mit Hilfe eines weiteren Elementes 18 ab. Die von dem Oberteil 2 auf das Unterteil 3 zu übertragenden Kräfte werden somit auch von dem zusätzlichen Element 18 aufgenommen.

Das zusätzliche Element 18 ist gemäß Ausführungsbeispiel ein elastisch verformbarer Körper z.B. in Gestalt eines Ringkörpers. Vorzugsweise ist der Ringkörper 18 ein 0-Ring und ist zwischen den beiden, radial nach außen divergierenden Kegelflächen 16 und 17 der beiden Teller 11 und 12 angeordnet, wobei er aufgrund der gewählten Abmessungen etwas über den Außenumfang 19, 20 der Randelemente 14, 15 mit den beiden Kegelflächen 16, 17 radial vorsteht und an einer zum Unterteil 3 gehörenden Stützfläche 21 anliegt. Die Stützfläche 21 erstreckt sich vertikal bzw. annähernd vertikal und ist gemäß Ausführungsbeispiel die zylindrische Innenfläche der Gehäusewand 22 des Gehäuses 5. Das Gehäuse 5 ist nach oben weitgehend offen, so daß der zum Oberteil 2 gehörende Teller 11 mit dem an ihm befindlichen Anschlußteil 9 aus dem Gehäuse 5 herausragen kann und relativ zum Unterteil 2 frei bewegbar ist. Das Gehäuse 5 weist lediglich einen oberen, einwärts umgebördelten Rand 23 auf, der sicherstellt, daß der Maschinenfuß eine komplette Montageeinheit darstellt.

Der Maschinenfuß 1 eines Waschautomaten 25, dessen Gehäuse 26 am Boden 27 vier Maschinenfüße 1, 28, 28' und 29 aufweist, wird im Falle von Bodenunebenheiten bei einer Erhebung mit einer größeren und bei einer Vertiefung mit einer geringeren Gewichtskraft F (Fig. 1) belastet. In Abhängigkeit von der Größe dieser Gewichtskraft, die zugleich ein Maß für die Bodenunebenheit ist, wird das Federelement 4 mehr oder weniger zusammengedrückt mit der Folge, daß sich das Oberteil 2 mit seinem Anschlußteil 9 in einer Höhe einstellt, in der die Gewichtskraft F und die Federkraft sich die Waage halten. Dabei spielt ferner eine Rolle, daß die Gewichtskraft F über den sich innen an der Gehäusewand 22 des Unterteiles 3 abstützenden Ringkörpers 18 auf das Federelement 4 übertragen wird. Der Ringkörper liegt bezogen auf die Richtung der Gewichtskraft F kraftschlüssig an der Gehäusewand 22 an und überträgt daher auch einen Anteil der Gewichtskraft F auf das Unterteil 2. Dies hat bei einer rein statischen Belastung durch eine Gewichtskraft F die Folge, daß der angestrebte, automatische Höhenausgleich weitgehend und auch im Rahmen der gestellten Anforderungen erfolgt. Im Falle von dynamischen Belastungen, wie sie z.B. durch Schwingungen hervorgerufen werden, übernimmt das zusätzliche Element 18 bzw. der Ringkörper 18 die Übertragung auf das Unterteil 3 unter nahezu völliger Umgehung des Federelementes 4. Der Ringkörper 18 wird nämlich aufgrund der Federkraft des Federelementes 4 in seiner dem statischen Zustand entsprechenden Lage gehalten und beim Auftreten von schwingungsbedingten dynamischen Kräften von den beiden an ihm anliegenden Randelementen 14 und 15 mit ihren Kegelflächen 16, 17 verstärkt unter gleichzeitiger Verformung an die Gehäusewand 22 gedrückt. Der Ringkörper 18 verändert daher beim Auftreten von Schwingungen seine Lage entsprechend der Position P in Fig. 2 nicht mit der Folge, daß somit bei kurzfristigen Lastwechseln keine Höhenverstellung des Oberteiles 2 eintritt. Die beim Schleudergang im Waschautomaten 25 auftretenden Schwingungen werden somit durch die elastische Verformung des Ringkörpers 18 aufgenommen und gedämpft. Das als Ringkörper vorgesehene Element 18 ist daher zugleich ein Puffer bzw. ein Dämpfungselement, das sowohl auftretende Schwingungen dämpft als auch in Richtung der Gewichtskraft F wirkende Kräfte zusammen mit den Kegelflächen 16 und 17 der Randelemente 14 und 15 der beiden Teller 11 und 12 in Kräfte mit einer anderen Komponente umlenkt. Die am Oberteil 2 in vertikaler Richtung V (Fig. 1) wirkenden Kräfte werden daher zumindest teilweise in horizontaler Richtung H (Fig. 2) umgelenkt und als Radialkraft auf die Gehäusewand 22 übertragen. Der Ringkörper 18 überträgt daher sowohl kraftschlüssig eine Kraftkomponente in Richtung V auf die Gehäusewand 22 als auch formschlüssig eine Kraftkomponente in Richtung H.

Durch das zusätzliche Element 18 wird erreicht, daß am Oberteil 2 angreifende Vibrationskräfte in möglichst geringem Umfang auf das Federelement 4 einwirken. Die Vibrationskräfte werden gedämpft und in eine andere Richtung gelenkt. Die Dämpfung erfolgt durch die Verwendung eines elastisch verformbaren Körpers bzw. Ringes. Die Umlenkung der Kräfte erfolgt in eine Richtung radial nach außen mit der Folge, daß sich die Teile auch beim Auftreten von Vibrationen nicht bewegen.

## Patentansprüche

1. Maschinenfuß mit einem maschinenseitigen, ein Anschluß-teil (9) aufweisenden Oberteil (2) und einem bodenseitigen Unterteil (3) und einem zwischen dem Oberteil (2) und dem Unterteil (3) angeordneten Federelement (4) sowie mit mindestens einem weiteren, elastisch verformbaren Körper (18), der die von dem Oberteil (2) auf das Unterteil (3) zu übertragenden Kräfte zumindest teilweise von dem Oberteil (2) unter Umgehung des Federelementes (4) direkt auf das Unterteil (3) überträgt,
dadurch gekennzeichnet,
daß der elastisch verformbare Körper (18) ein Ringkörper ist, daß ferner ein zylindrisches Gehäuse (5) vorgesehen ist und daß der ringförmige Körper (18) zwischen zwei Kegelflächen (16, 17) und dem zylindrischen Gehäuse (5) angeordnet ist, wobei eine der Kegelflächen dem Federelement zugeordnet ist.

2. Maschinenfuß nach Anspruch 1, dadurch gekennzeichnet, daß alle auftretenden Kräfte durch den elastischen Körper (18) gerichtet sind.

3. Maschinenfuß nach einem oder mehreren der vorhergehenden Ansprüche, dadurch gekennzeichnet, daß der ringförmige, elastische Körper (18) ein O-Ring ist.

4. Maschinenfuß nach einem oder mehreren der vorhergehenden Ansprüche, dadurch gekennzeichnet, daß der ringförmige Körper (18) die in vertikaler Richtung (V) wirkende sowie in Richtung einer horizontalen Komponente (H) zerlegte Kraft am Unterteil (3) sowie am Federelement (4) abstützt.

5. Maschinenfuß nach einem oder mehreren der vorhergehenden Ansprüche, dadurch gekennzeichnet, daß sich der ringförmige Körper (18) am Unterteil (3) an einer vertikalen oder annähernd vertikalen Stützfläche (21) abstützt.

6. Maschinenfuß nach einem oder mehreren der vorhergehenden Ansprüche, dadurch gekennzeichnet, daß die eine Kegelfläche (16) am Oberteil (2) angeordnet ist und daß das Unterteil (3) konzentrisch den ringförmigen Körper (18) umgehend angeordnet ist.

7. Maschinenfuß nach einem oder mehreren der vorhergehenden Ansprüche, dadurch gekennzeichnet, daß die Kegelflächen (16, 17) radial außen an hutförmigen Tellern (11, 12) angeordnet sind und radial nach außen divergieren.

8. Maschinenfuß nach einem oder mehreren der vorhergehenden Ansprüche, dadurch gekennzeichnet, daß der eine Teller (11) das bodenseitige Ende des Oberteiles (2) bildet und daß der andere Teller (12) am oberen, freien Ende (13) des Federelementes (4) sowie parallel und koaxial zum ersten Teller (11) angeordnet ist.

9. Maschinenfuß nach einem oder mehreren der vorhergehenden Ansprüche, dadurch gekennzeichnet, daß das Federelement (4) eine konische Schraubenfeder ist.

10. Maschinenfuß nach einem oder mehreren der vorhergehenden Ansprüche, dadurch gekennzeichnet, daß die Stützfläche (21) eine zylindrische Innenfläche einer Gehäusewand (22) eines das Federelement (4) und die Teller (11, 12) mit dem ringförmigen, elastischen Körper (18) aufnehmenden Gehäuses (5) ist.

## Claims

1. A machine leg comprising an upper portion (2) at the machine side, having a connecting portion (9), and a lower portion (3) at the ground side, and a spring element (4) arranged between the upper portion (2) and the lower portion (3), and at least one further, elastically deformable body (18) which transmits the forces to be transmitted from the upper portion (2) to the lower portion (3), at least partially from the upper portion (2) directly to the lower portion (3), by-passing the spring element (4), characterised in that the elastically deformable body (18) is an annular body, that in addition there is provided a cylindrical housing (5), and that the annular body (18) is arranged between two conical surfaces (16, 17) and the cylindrical housing (5), wherein one of the conical surfaces is associated with the spring element.

2. A machine leg according to claim 1 characterised in that all forces occurring are directed through the elastic body (18).

3. A machine leg according to one or more of the preceding claims characterised in that the annular elastic body (18) is an O-ring.

4. A machine leg according to one or more of the preceding claims characterised in that the annular body (18) supports the force which acts in a vertical direction (V) and which is resolved in the direction of a horizontal component (H) against the lower portion (3) and the spring element (4).

5. A machine leg according to one or more of the preceding claims characterised in that the annular body (18) is supported against the lower portion (3) at a vertical or approximately vertical support surface (21).

6. A machine leg according to one or more of the preceding claims characterised in that the one conical surface (16) is arranged on the upper portion (2) and that the lower portion (3) is arranged concentrically surrounding the annular body (18).

7. A machine leg according to one or more of the preceding claims characterised in that the conical surfaces (16, 17) are arranged radially outwardly on cap-shaped plates (11, 12) and diverge radially outwardly.

8. A machine leg according to one or more of the preceding claims characterised in that the one plate (11) forms the end of the upper portion (2), that is towards the ground, and that the other plate (12) is arranged at the upper free end (13) of the spring element (4) and parallel and coaxial with the first plate (11).

9. A machine leg according to one or more of the preceding claims characterised in that the spring element (4) is a conical coil spring.

10. A machine leg according to one or more of the preceding claims characterised in that the support surface (21) is a cylindrical inside surface of a wall (22) of a housing (5) which accommodates the spring element (4) and the plates (11, 12) with the annular elastic body (18).

## Revendications

1. Pied de machine comprenant, côté machine, une partie supérieure (2) qui présente une pièce de jonction (9) et, côté sol, une partie inférieure (3), un élément ressort (4) disposé entre la partie supérieure (2) et la partie inférieure (3) ainsi qu'au moins un autre corps déformable élastiquement (18) qui transmet les forces, à transférer de la partie supérieure (2) à la partie inférieure (3), directement ou au moins partiellement de la partie supérieure (2) à la partie inférieure (3) par l'intermédiaire de l'élément ressort (4),
caractérisé en ce que
le corps élastiquement déformable (18) est un corps annulaire, en ce qu'il est, en outre, prévu un barillet cylindrique (5) et en ce que le corps annulaire (18) est disposé entre deux surfaces coniques (16, 17) et le barillet cylindrique (5), l'une des surfaces coniques étant associée à l'élément ressort.

2. Pied de machine selon la revendication 1, caractérisé en ce que les forces en présence sont orientées par le corps élastique (18).

3. Pied de machine selon l'une ou plusieurs des revendications précédentes, caractérisé en ce que le corps annulaire élastique (18) est un joint torique.

4. Pied de machine selon l'une ou plusieurs des revendications précédentes, caractérisé en ce que le corps annulaire (18) applique la force décomposée en une composante (V) agissant verticalement et une composante (H) agissant horizontalement, aussi bien au niveau de la partie inférieure (3) que de l'élément ressort (4).

5. Pied de machine selon l'une ou plusieurs des revendications précédentes, caractérisé en ce que le corps annulaire (18) prend appui sur une surface de support (21) verticale ou presque verticale, contre la partie inférieure (3).

6. Pied de machine selon l'une ou plusieurs des revendications précédentes, caractérisé en ce que la surface conique (16) se trouve sur la partie supérieure (2) et en ce que la partie inférieure (3) est disposée de manière concentrique par rapport au corps annulaire (18) de manière à entourer ce dernier.

7. Pied de machine selon l'une ou plusieurs des revendications précédentes, caractérisé en ce que les surfaces coniques (16, 17) sont disposées radialement à l'extérieur de rondelles (11, 12) en forme de chapeau et divergent radialement vers l'extérieur.

8. Pied de machine selon l'une ou plusieurs des revendications précédentes, caractérisé en ce que la rondelle (11) forme, côté sol, l'extrémité supérieure de la partie supérieure (2) et en ce que l'autre rondelle (12) est disposée sur l'extrémité libre supérieure (13) de l'élément ressort (4) tout en étant coaxiale et parallèle à la première rondelle (11).

9. Pied de machine selon l'une ou plusieurs des revendications précédentes, caractérisé en ce que l'élément ressort (4) est un ressort à boudin conique.

10. Pied de machine selon l'une ou plusieurs des revendications précédentes, caractérisé en ce que la surface de support (21) est une surface interne cylindrique d'une paroi (22) d'un barillet (5) qui loge l'élément ressort (4) et les rondelles (11, 12) présentant le corps élastique déformable (18).
